# EUROPEAN PATENT APPLICATION

(11) **EP 4 465 726 A1**
(43) Date of publication of application: **20.11.2024**
(21) Application number: 22919104.4
(22) Date of filing: 29.12.2022
(51) Int. Cl.: H04W 72/20, H04L 5/00, H04L 1/18

(54) **METHOD AND DEVICE FOR TRANSMITTING INTER-UE COORDINATION INFORMATION**

(30) Priority: 10.01.2022 KR 20220003592
(71) Applicant: Hyundai Motor Company, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HONG, Ui Hyun, Hwaseong-si, Gyeonggi-do 18280 (KR); HAHN, Gene Back, Hwaseong-si, Gyeonggi-do 18280 (KR); SON, Hyuk Min, Seoul 05649 (KR)
(74) Representative: Viering, Jentschura & Partner mbB Patent- und Rechtsanwälte
(86) International application number: PCT/KR2022/021659
(87) International publication number: WO 2023/132567

(57) **Abstract**

A method and a device for transmitting inter-UE coordination information are disclosed. The method of a UE-A comprises the steps of: receiving SCI from a UE-B; detecting one or more resource collisions from among resources indicated by the SCI; confirming one or more PSFCH resources mapped to the one or more resource collisions on the basis of a mapping relation; and transmitting, to the UE-B, IUC information about the one or more resource collisions in the one or more PSFCH resources.

## Description

### [Technical Field]

The present disclosure relates to a sidelink communication technique, and more particularly, to a technique for transmitting and receiving inter-user equipment (UE) coordination information.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in sidelink communication, a user-equipment (UE)-B may request a UE-A to transmit inter-UE coordination information. The UE-A may transmit inter-UE coordination information to the UE-B at the request of the UE-B. The UE-B may receive the inter-UE coordination information from the UE-A and perform sidelink communication based on the inter-UE coordination information. The inter-UE coordination information may be transmitted through a physical sidelink feedback channel (PSFCH) resource. However, issues arise when a PSFCH resource is unavailable or when multiple PSFCH resources are present, leading to ambiguity in transmitting the inter-UE coordination information. Methods to address these problems are required.

### [Disclosure]

### [Technical Problem]

The present disclosure is directed to providing a method and an apparatus for transmitting and receiving inter-UE coordination information in sidelink communication.

### [Technical Solution]

A method of a user equipment (UE)-A, according to a first exemplary embodiment of the present disclosure for achieving the above-described objective, may comprise: receiving sidelink control information (SCI) from a UE-B; detecting one or more resource conflicts in resources indicated by the SCI; identifying one or more physical sidelink feedback channel (PSFCH) resources associated with the one or more resource conflicts; and transmitting inter-UE coordination (IUC) information on the one or more resource conflicts to the UE-B in the one or more PSFCH resources, wherein the one or more PSFCH resources exist between a reception time of the SCI and a location of the one or more resource conflicts in a time domain.

When the one or more resource conflicts include resource conflicts #1 and #2, and the one or more PSFCH resources include PSFCH resources #1 and #2, the IUC information on the resource conflicts #1 and #2 may be identified to be transmitted in the PSFCH resource #1 based on a mapping relationship, the PSFCH resource #1 being earlier in the time domain among the PSFCH resources #1 and #2.

When the one or more resource conflicts include resource conflicts #1 and #2, and the one or more PSFCH resources include PSFCH resources #1 and #2, IUC information #1 on the resource conflict #1 may be identified to be transmitted in the PSFCH resource #1 based on a mapping relationship, and IUC information #2 on the resource conflict #2 may be identified to be transmitted in the PSFCH resource #2 based on the mapping relationship.

When the one or more resource conflicts include resource conflicts #1 and #2, and the one or more PSFCH resources include PSFCH resources #1 and #2, the IUC information on the resource conflicts #1 and #2 may be identified to be transmitted in the PSFCH resource #2 based on a mapping relationship, the PSFCH resource #2 being later in the time domain among the PSFCH resources #1 and #2.

When an interval between a plurality of PSFCH resources and the location of the one or more resource conflicts in the time domain is equal to or greater than a time offset, an earliest PSFCH resource or a latest PSFCH resource among the plurality of PSFCH resources may be used for transmission of the IUC information.

When an interval between a plurality of PSFCH resources and the location of the one or more resource conflicts in the time domain is less than a time offset, an earliest PSFCH resource or a latest PSFCH resource among the plurality of PSFCH resources may be used for transmission of the IUC information.

Information on a mapping relationship between the one or more resource conflicts and the one or more PSFCH resources may be received through at least one of system information, a radio resource control (RRC) message, a medium access control (MAC) message, or a physical (PHY) message.

When the one or more PSFCH resources include PSFCH resources #1 and #2, and the PSFCH resource #1 is located before the PSFCH resource #2 in the time domain, the detecting of the one or more resource conflicts may be performed in a period from a reception time of the SCI to a time corresponding to (PSFCH resource #1 - time offset).

When the one or more PSFCH resources include PSFCH resources #1 and #2, and the PSFCH resource #1 is located before the PSFCH resource #2 in the time domain, the detecting of the one or more resource conflicts may be performed in a period from a reception time of the SCI to a time corresponding to (PSFCH resource #2 - time offset).

When the one or more PSFCH resources include PSFCH resources #1 and #2, and the PSFCH resource #1 is located before the PSFCH resource #2 in the time domain, the detecting of the one or more resource conflicts may be performed in a period from a time corresponding to the PSFCH resource #1 to a time corresponding to (PSFCH resource #2 - time offset).

The detecting of the one or more resource conflicts may be performed in a period from a reception time of the SCI to a preconfigured time offset.

The SCI may include an IUC enable/disable indicator indicating to enable or disable a transmission operation of the IUC information, and when the IUC enable/disable indicator indicates to enable the transmission of the IUC information, the detecting of the one or more resource conflicts may be performed.

The SCI may include an IUC enable/disable indicator indicating to enable or disable a transmission operation of the IUC information, and even when the IUC enable/disable indicator indicates to disable the transmission of the IUC information, if the UE-A determines that the transmission operation of the IUC information is required, the detecting of the one or more resource conflicts may be performed.

The method may further comprise: performing a measurement operation for a channel busy ratio (CBR) or channel occupancy ratio (CR) in a resource pool; and determining whether a transmission operation of the IUC information is required by comparing a result of the measurement operation with a threshold.

A method of a UE-B, according to a second exemplary embodiment of the present disclosure for achieving the above-described objective, may comprise: transmitting sidelink control information (SCI) to a UE-A; identifying one or more physical sidelink feedback channel (PSFCH) resources associated with one or more resource conflicts detected in resources indicated by the SCI; and receiving inter-UE coordination (IUC) information on the one or more resource conflicts from the UE-A in the one or more PSFCH resources, wherein the one or more PSFCH resources exist between a reception time of the SCI and a location of the one or more resource conflicts in a time domain.

When the one or more resource conflicts include resource conflicts #1 and #2, and the one or more PSFCH resources include PSFCH resources #1 and #2, the IUC information on the resource conflicts #1 and #2 may be received in the PSFCH resource #1, the PSFCH resource #1 being earlier in the time domain among the PSFCH resources #1 and #2.

When the one or more resource conflicts include resource conflicts #1 and #2, and the one or more PSFCH resources include PSFCH resources #1 and #2, IUC information #1 on the resource conflict #1 may be received in the PSFCH resource #1, and IUC information #2 on the resource conflict #2 may be received in the PSFCH resource #2.

When the one or more resource conflicts include resource conflicts #1 and #2, and the one or more PSFCH resources include PSFCH resources #1 and #2, the IUC information on the resource conflicts #1 and #2 may be received in the PSFCH resource #2, the PSFCH resource #2 being later in the time domain among the PSFCH resources #1 and #2.

The SCI may include an IUC enable/disable indicator indicating to enable or disable a transmission operation of the IUC information, and when the IUC enable/disable indicator indicates to enable the transmission of the IUC information, the IUC information on the one or more resource conflicts may be received.

The SCI may include an IUC enable/disable indicator indicating to enable or disable a transmission operation of the IUC information, and even when the IUC enable/disable indicator indicates to disable the transmission of the IUC information, if the UE-A determines that the transmission operation of the IUC information is required, the IUC information on the one or more resource conflicts may be received.

### [Advantageous Effects]

According to the present disclosure, a UE-B can detect resource conflict(s) in resources indicated by SCI received from a UE-A, identify PSFCH resource(s) mapped to the resource conflict(s) based on a mapping relationship, and transmit information on the resource conflict(s) to the UE-B in the PSFCH resource(s). Consequently, information on the resource conflict(s) can be transmitted and received efficiently, leading to an improvement of the performance of sidelink communication.

### [Description of Drawings]

FIG. 1 is a conceptual diagram illustrating scenarios of Vehicle-to-Everything (V2X) communications.
FIG. 2 is a conceptual diagram illustrating a first exemplary embodiment of a communication system.
FIG. 3 is a conceptual diagram illustrating a first exemplary embodiment of a communication node constituting a communication system.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6 is a block diagram illustrating a first exemplary embodiment of a user plane protocol stack of a UE performing sidelink communication.
FIG. 7 is a block diagram illustrating a first exemplary embodiment of a control plane protocol stack of a UE performing sidelink communication.
FIG. 8 is a block diagram illustrating a second exemplary embodiment of a control plane protocol stack of a UE performing sidelink communication.
FIG. 9 is a timing diagram illustrating a first exemplary embodiment of a method for transmitting IUC information.
FIG. 10 is a timing diagram illustrating a second exemplary embodiment of a method for transmitting IUC information.
FIG. 11 is a timing diagram illustrating a third exemplary embodiment of a method for transmitting IUC information.
FIG. 12 is a timing diagram illustrating a fourth exemplary embodiment of a method for transmitting IUC information.
FIG. 13 is a timing diagram illustrating a fifth exemplary embodiment of a method for transmitting IUC information.
FIG. 14 is a timing diagram illustrating a sixth exemplary embodiment of a method for transmitting IUC information.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to `transmission', 'retransmission', or `transmission and retransmission', `(re)configuration' may refer to 'configuration', `reconfiguration', or 'configuration and reconfiguration', `(re)connection' may refer to 'connection', `reconnection', or `connection and reconnection', and `(re)access' may refer to 'access', `re-access', or `access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a `higher layer message' or `higher layer signaling message'. A message used for MAC signaling may be referred to as a `MAC message' or `MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, `configuration of an operation (e.g., transmission operation)' may refer to signaling of configuration information (e.g., information elements, parameters) required for the operation and/or information indicating to perform the operation. `configuration of information elements (e.g., parameters)' may refer to signaling of the information elements. In the present disclosure, `signal and/or channel' may refer to signal, channel, or both signal and channel, and `signal' may be used to mean `signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, `communication network' may be used interchangeably with a term `communication system' .

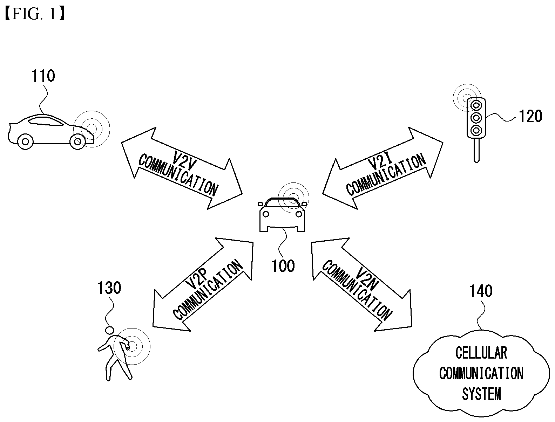

FIG. 1 is a conceptual diagram illustrating scenarios of Vehicle-to-Everything (V2X) communications.

As shown in FIG. 1, V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a communication system (e.g., communication network) 140, and the V2X communications supported by the communication system 140 may be referred to as `Cellular-V2X (C-V2X) communications'. Here, the communication system 140 may include the 4G communication system (e.g., LTE communication system or LTE-A communication system), 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported by the communication system 140 may be performed based on sidelink communication technologies (e.g., Proximity Based Services (ProSe) and Device-to-Device (D2D) communication technologies, and the like). In the instant case, the communications between the vehicles 100 and 110 may be performed using at least one sidelink channel.

The V2I communications may include communications between the first vehicle 100 and an infrastructure (e.g., road side unit (RSU)) 120 located on a roadside. The infrastructure 120 may include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported by the communication system 140 may be performed based on sidelink communication technologies (e.g., ProSe and D2D communication technologies, and the like). In the instant case, the communications between the vehicle 100 and the infrastructure 120 may be performed using at least one sidelink channel.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported by the communication system 140 may be performed based on sidelink communication technologies (e.g., ProSe and D2D communication technologies, and the like). In the instant case, the communications between the communication node located in the vehicle 100 and the communication node carried by the person 130 may be performed using at least one sidelink channel.

The V2N communications may be communications between the first vehicle 100 (e.g., the communication node located in the vehicle 100) and the communication system (e.g., communication network) 140. The V2N communications may be performed based on the 4G communication technology (e.g., LTE or LTE-A specified as the 3GPP standards) or the 5G communication technology (e.g., NR specified as the 3GPP standards). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, a Wireless Personal Area Network (WPAN) communication technology defined in IEEE 802.15, or the like.

Meanwhile, the communication system 140 supporting the V2X communications may be configured as follows.

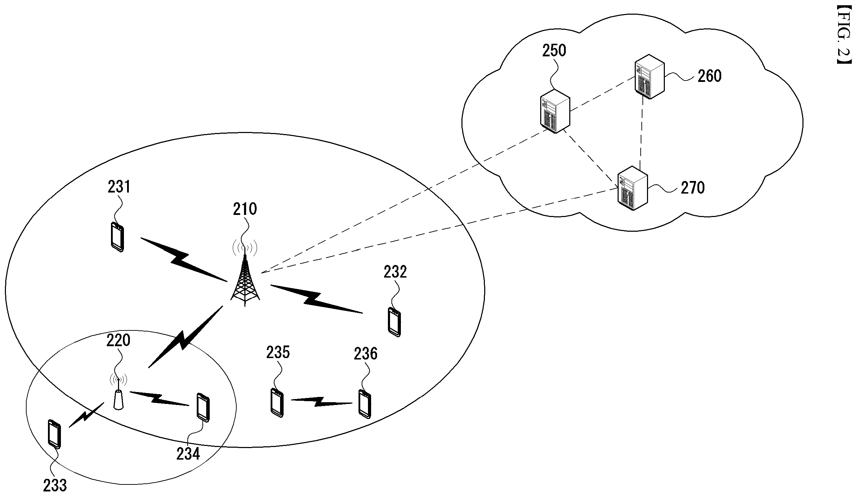

FIG. 2 is a conceptual diagram illustrating a first exemplary embodiment of a communication system.

As shown in FIG. 2, a communication system may include an access network, a core network, and the like. The access network may include a base station 210, a relay 220, user equipment (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the communication system supports the 4G communication technology, the core network may include a serving gateway (S-GW) 250, a packet data network (PDN) gateway (P-GW) 260, a mobility management entity (MME) 270, and the like.

When the communication system supports the 5G communication technology, the core network may include a user plane function (UPF) 250, a session management function (SMF) 260, an access and mobility management function (AMF) 270, and the like. Alternatively, when the communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slices configured in the core network.

The communication nodes (e.g., base station, relay, UE, S-GW, P-GW, MME, UPF, SMF, AMF, etc.) constituting the communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) constituting the communication system may be configured as follows.

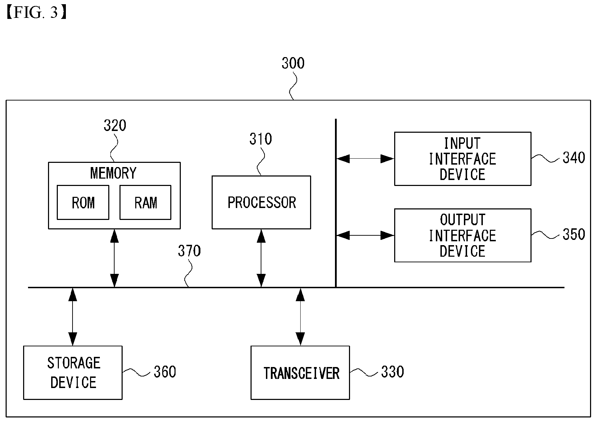

FIG. 3 is a conceptual diagram illustrating a first exemplary embodiment of a communication node constituting a communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one program command stored in at least one of the memory 320 and the storage device 360. The processor 310 may refer to a central processing unit (CPU), a graphics processing unit (GPU), or a dedicated processor on which methods in accordance with exemplary embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to a cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), evolved Node B (eNB), base transceiver station (BTS), radio remote head (RRH), transmission reception point (TRP), radio unit (RU), roadside unit (RSU), radio transceiver, access point, access node, or the like. The relay 220 may be referred to as a small base station, relay node, or the like. Each of the UEs 231 through 236 may be referred to as a terminal, access terminal, mobile terminal, station, subscriber station, mobile station, portable subscriber station, node, device, on-broad unit (OBU), or the like.

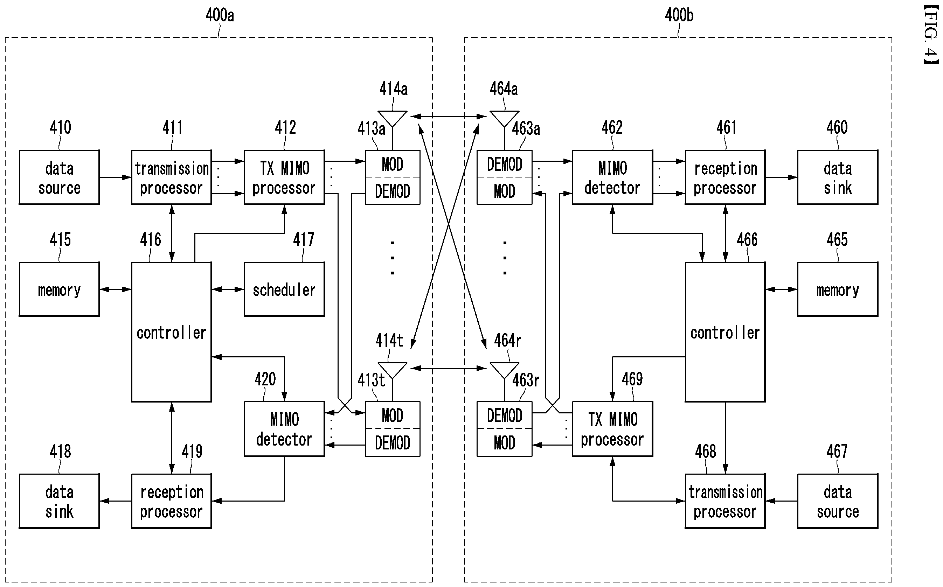

Meanwhile, communication nodes that perform communications in the communication network may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g., data unit) from a data source 410. The transmission processor 411 may receive control information from a controller 416. The control information may include at least one of system information, RRC configuration information (e.g., information configured by RRC signaling), MAC control information (e.g., MAC CE), or PHY control information (e.g., DCI, SCI).

The transmission processor 411 may generate data symbol(s) by performing processing operations (e.g., encoding operation, symbol mapping operation, etc.) on the data. The transmission processor 411 may generate control symbol(s) by performing processing operations (e.g., encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g., precoding operations) on the data symbol(s), control symbol(s), and/or synchronization/reference symbol(s). An output (e.g., symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g., de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 468 included in the second communication node 400b may receive data (e.g., data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g., precoding operations) on the data symbol(s), control symbol(s), and/or reference symbol(s). An output (e.g., symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g., de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

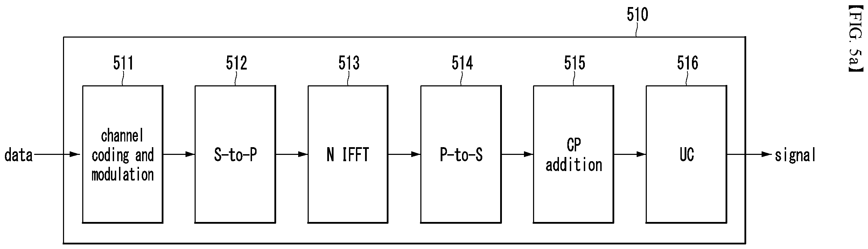

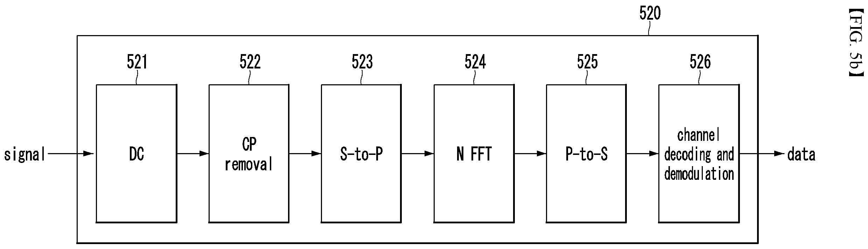

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and an up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., , parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g., components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, communications between the UEs 235 and 236 may be performed based on sidelink communication technology (e.g., ProSe communication technology, D2D communication technology). The sidelink communication may be performed based on a one-to-one scheme or a one-to-many scheme. When V2V communication is performed using sidelink communication technology, the UE 235 may refer to a communication node located in the first vehicle 100 of FIG. 1, and the UE 236 may refer to a communication node located in the second vehicle 110 of FIG. 1. When V2I communication is performed using sidelink communication technology, the UE 235 may refer to a communication node located in the first vehicle 100 of FIG. 1, and the UE 236 may refer to a communication node located in the infrastructure 120 of FIG. 1. When V2P communication is performed using sidelink communication technology, the UE 235 may refer to a communication node located in the first vehicle 100 of FIG. 1, and the UE 236 may refer to a communication node carried by the person 130.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

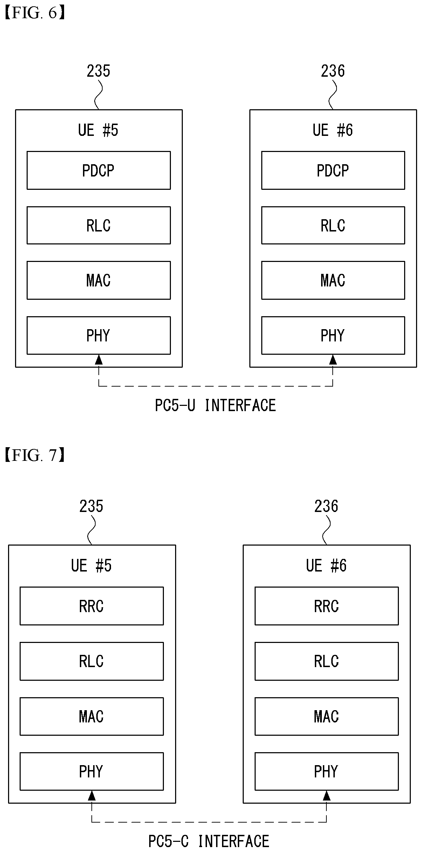

FIG. 6 is a block diagram illustrating a first exemplary embodiment of a user plane protocol stack of a UE performing sidelink communication.

As shown in FIG. 6, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications. Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

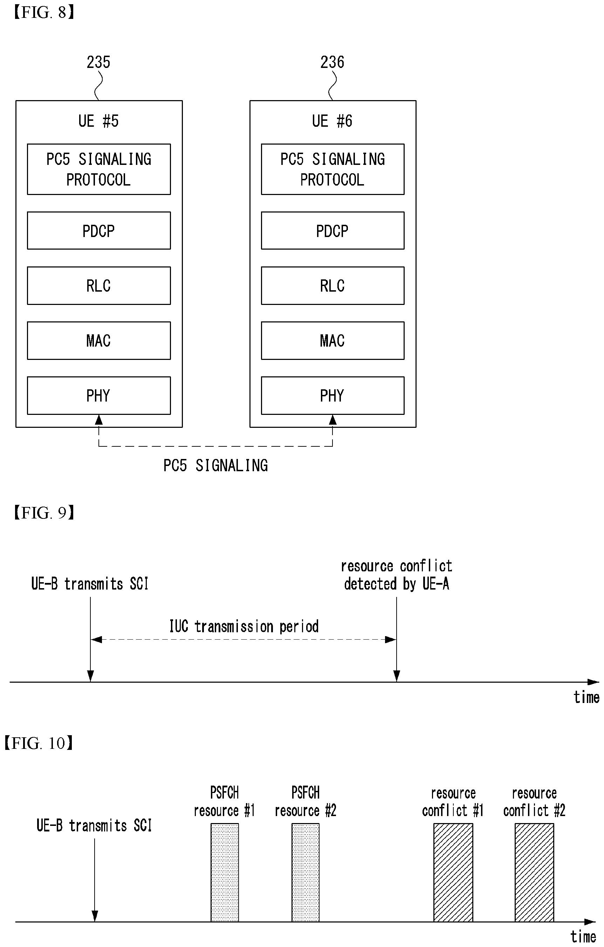

FIG. 7 is a block diagram illustrating a first exemplary embodiment of a control plane protocol stack of a UE performing sidelink communication, and FIG. 8 is a block diagram illustrating a second exemplary embodiment of a control plane protocol stack of a UE performing sidelink communication.

As shown in FIGS. 7 and 8, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The control plane protocol stack illustrated in FIG. 7 may be a control plane protocol stack for transmission and reception of broadcast information (e.g., Physical Sidelink Broadcast Channel (PSBCH)).

The control plane protocol stack shown in FIG. 7 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 8 may be a control plane protocol stack for one-to-one sidelink communication. The control plane protocol stack shown in FIG. 8 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by higher layer signaling. The PSCCH may be used for transmitting and receiving sidelink control information (SCI) and may also be configured in the UE (e.g., UE 235 or 236) by higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In the instant case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In the instant case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In the instant case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In the instant case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The base station may transmit system information (e.g., SIB 12, SIB 13, SIB 14) and RRC messages including configuration information for sidelink communication (i.e. sidelink configuration information) to UE(s). The UE may receive the system information and RRC messages from the base station, identify the sidelink configuration information included in the system information and RRC messages, and perform sidelink communication based on the sidelink configuration information. The SIB 12 may include sidelink communication/discovery configuration information. The SIB 13 and SIB 14 may include configuration information for V2X sidelink communication.

The sidelink communication may be performed within a SL bandwidth part (BWP). The base station may configure SL BWP(s) to the UE using higher layer signaling. The higher layer signaling may include *SL-BWP-Config* and/or *SL-BWP-ConfigCommon. SL-BWP-Config* may be used to configure a SL BWP for UE-specific sidelink communication. *SL-BWP-ConfigCommon* may be used to configure cell-specific configuration information.

Furthermore, the base station may configure resource pool(s) to the UE using higher layer signaling. The higher layer signaling may include *SL-BWPPoolConfig*, *SL-BWP-PoolConfigCommon, SL-B WP-DiscPoolConfig,* and/or *SL-BWP-DiscPoolConfigCommon. SL-BWP-PoolConfig* may be used to configure a sidelink communication resource pool. *SL-BWP-PoolConfigCommon* may be used to configure a cell-specific sidelink communication resource pool. *SL-BWP-DiscPoolConfig* may be used to configure a resource pool dedicated to UE-specific sidelink discovery. *SL-BWP-DiscPoolConfigCommon* may be used to configure a resource pool dedicated to cell-specific sidelink discovery. The UE may perform sidelink communication within the resource pool configured by the base station.

The sidelink communication may support SL discontinuous reception (DRX) operations. The base station may transmit a higher layer message (e.g., *SL-DRX-Config)* including SL DRX-related parameter(s) to the UE. The UE may perform SL DRX operations based on *SL-DRX Config* received from the base station. The sidelink communication may support inter-UE coordination operations. The base station may transmit a higher layer message (e.g., *SL-InterUE-CoordinationConfig)* including inter-UE coordination parameter(s) to the UE. The UE may perform inter-UE coordination operations based on *SL-InterUE-CoordinationConfig* received from the base station.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The SCI format 1-A may be used for scheduling a PSSCH and second-stage SCI. The SCI format 1-A may include at least one among priority information, frequency resource assignment information, time resource assignment information, resource reservation period information, demodulation reference signal (DMRS) pattern information, second-stage SCI format information, beta_offset indicator, number of DMRS ports, modulation and coding scheme (MCS) information, additional MCS table indicator, PSFCH overhead indicator, or conflict information receiver flag.

The SCI format 2-A may be used for decoding of a PSSCH. The SCI format 2-A may include at least one among a HARQ processor number, new data indicator (NDI), redundancy version (RV), source ID, destination ID, HARQ feedback enable/disable indicator, cast type indicator, or CSI request.

The SCI format 2-B may be used for decoding of a PSSCH. The SCI format 2-B may include at least one among a HARQ processor number, NDI, RV, source ID, destination ID, HARQ feedback enable/disable indicator, zone ID, or communication range requirement.

The SCI format 2-C may be used for decoding of a PSSCH. In addition, the SCI format 2-C may be used to provide or request inter-UE coordination information. The SCI format 2-C may include at least one among a HARQ processor number, NDI, RV, source ID, destination ID, HARQ feedback enable/disable indicator, CSI request, or providing/requesting indicator.

When a value of the providing/requesting indicator is set to 0, this may indicate that the SCI format 2-C is used to provide inter-UE coordination information. In the instant case, the SCI format 2-C may include at least one among resource combinations, first resource location, reference slot location, resource set type, or lowest subchannel indexes.

When a value of the providing/requesting indicator is set to 1, this may indicate that the SCI format 2-C is used to request inter-UE coordination information. In the instant case, the SCI format 2-C may include at least one among a priority, number of subchannels, resource reservation period, resource selection window location, resource set type, or padding bit(s).

Meanwhile, inter-UE coordination (IUC) information may be used in sidelink communication. A UE transmitting IUC information may be referred to as UE-A, and a UE receiving IUC information may be referred to as UE-B. The UE-A may transmit IUC information to the UE-B at a request of the UE-B. Alternatively, the UE-A may transmit IUC information to the UE-B without a request of the UE-B. The UE-B may perform a resource selection operation or resource reselection operation based on the IUC information received from the UE-A.

The IUC information may include at least one of preferred resource information, non-preferred resource information, or resource conflict information. In IUC Scheme 1, the UE-A may transmit IUC information including preferred resource information and/or non-preferred resource information to the UE-B. In IUC Scheme 2, the UE-A may transmit IUC information including resource conflict information to the UE-B. The preferred resource information may refer to a preferred resource set, the non-preferred resource information may refer to a non-preferred resource set, and the resource conflict information may refer to a resource conflict set. The resource conflict information may indicate expected or potential resource conflicts. In the present disclosure, 'resource information' may be used as a term to mean the preferred resource information, non-preferred resource information, and/or resource conflict information, and 'resource set' may be used as a term to mean the preferred resource set, non-preferred resource set, and/or resource conflict set.

When IUC Scheme 2 is used, IUC information on resource conflict(s) detected or sensed by the UE-A may be transmitted through PSFCH resource(s). For example, the UE-B may transmit SCI (e.g., SCI requesting transmission of IUC information), and IUC information on the resource conflict(s) detected by the UE-A may be transmitted through PSFCH resource(s) existing within a period from a transmission time of the SCI to a time of the detected resource conflict (hereinafter referred to as `IUC transmission period'). Additionally or alternatively, a signal requesting transmission of IUC information may exist separately from SCI. In the instant case, the UE-B may transmit a signal requesting transmission of IUC information to the UE-A. When the signal requesting transmission of ICU information is received from the UE-B, the UE-A may perform a resource conflict detection operation for resources indicated by SCI of the UE-B. In the present disclosure, `transmission time' may refer to a transmission start time or a transmission end time, and 'reception time' may refer to a reception start time or a reception end time. In the time domain, PSFCH resources may mean PSFCH symbols.

The UE-A may perform a monitoring operation (e.g., PSCCH monitoring operation) to generate and/or update IUC information in a period from a specific time (e.g., reception time of SCI) to a time before a preconfigured time from the PSFCH resource. The UE-B may request the UE-A to transmit IUC information using different PSFCH resources in the time domain. The IUC information to be transmitted through PSFCH resource(s) may vary depending on locations of the different PSFCH resources in the time domain. When a PSFCH resource for transmitting the IUC information overlaps with another PSFCH resource, ambiguity may occur regarding information transmitted in the overlapping PSFCH resource.

FIG. 9 is a timing diagram illustrating a first exemplary embodiment of a method for transmitting IUC information.

As shown in FIG. 9, a UE-B may transmit SCI (e.g., SCI requesting transmission of IUC information) to a UE-A. The UE-A may receive the SCI from the UE-B and detect resource conflict(s) by performing a monitoring operation according to the request of the SCI. The UE-A may detect resource conflict(s) for resources indicated by the SCI. For example, the UE-A may perform a monitoring operation (e.g., PSCCH/PSSCH monitoring operations) for other SCIs. When a resource scheduled by another SCI overlaps a resource indicated by the SCI of the UE-B, the UE-A may determine that a resource conflict is to occur in the corresponding overlapping resource.

The UE-A may transmit IUC information on the resource conflict to the UE-B in a PSFCH resource within a period (e.g., IUC transmission period) from a reception time of the SCI of the UE-B to a time of the detected resource conflict. When a PSFCH resource for transmission of IUC information does not exist within the IUC transmission period, the UE-A may not transmit the IUC information.

A plurality of resources indicated by the SCI transmitted by the UE-B may exist in the time domain, and a PSFCH resource for transmission of IUC information may not exist in a period (e.g., IUC transmission period) from a transmission time of the SCI to a time of resource(s) indicated by the SCI. In the instant case, the UE-A may not transmit IUC information, and the UE-B may not expect to receive IUC information from the UE-A. When there is one or more PSFCH resources available for transmission of IUC information in the IUC transmission period, the UE-B may transmit SCI (or a separate signal) requesting transmission of IUC information to the UE-A.

The exemplary embodiment of FIG. 9, extensions of the exemplary embodiment, modifications of the exemplary embodiment, and/or combination of the exemplary embodiment may be applied to a scenario where multiple UE-As and one UE-B exist, a scenario where one UE-A and multiple UE-Bs exist, or a scenario where multiple UE-As and multiple UE-Bs exist.

FIG. 10 is a timing diagram illustrating a second exemplary embodiment of a method for transmitting IUC information.

As shown in FIG. 10, there may be a plurality of PSFCH resources (e.g., PSFCH resource #1, PSFCH resource #2) available for transmission of IUC information within an IUC transmission period. A plurality of resource conflicts (e.g., resource conflict #1, resource conflict #2) may be detected in the time domain. When there are a plurality of resource conflicts, the IUC transmission period may be a period from a transmission time of SCI to a time of the first resource conflict (e.g., resource conflict #1) among the plurality of resource conflicts. Alternatively, when there are a plurality of resource conflicts (e.g., resource conflict #1, resource conflict #2), the IUC transmission period may be a period from a transmission time of SCI to a time of the last resource conflict (e.g., resource conflict #2).

When a plurality of PSFCH resources and a plurality of resource conflicts exist, a mapping relationship between PSFCH resources and resource conflicts may be configured. In the present disclosure, the mapping relationship may mean an association relationship or a correspondence relationship. Based on the mapping relationship, the UE-A may transmit IUC information on a resource conflict to the UE-B using a PSFCH resource mapped to (e.g., associated with or corresponding to) the resource conflict. The base station (or UE) may transmit configuration information of the mapping relationship between PSFCH resources and resource conflicts to the UE(s) using at least one of system information, RRC message, MAC message, or PHY message. The UE(s) may receive the configuration information of the mapping relationship from the base station or another UE. The above-mentioned mapping relationship may be configured as Table 3, Table 4, and/or Table 5 below.

Based on the mapping relationship in Table 3, the UE-A may transmit the IUC information (e.g., information on the resource conflict #1 and resource conflict #2) to the UE-B using the earliest PSFCH resource #1 among the plurality of PSFCH resources in the time domain. The UE-B may receive the IUC information of the UE-A in the PSFCH resource #1, and perform sidelink communication (e.g., resource (re)selection operation) considering the IUC information. According to the mapping relationship in Table 3, a transmission latency of the IUC information can be minimized.

**[Table 3]**

| **PSFCH** | **Resource conflicts** |
|---|---|
| PSFCH resource #1 | Resource conflicts #1 and #2 |
| PSFCH resource #2 | - |

Based on the mapping relationship in Table 4, the UE-A may use the PSFCH resource #1 to transmit IUC information on the resource conflict #1 to the UE-B, and use the PSFCH resource #2 to transmit IUC information on the resource conflict #2 to the UE-B. IUC information indicating different resource conflicts may be transmitted in different PSFCH resources. The UE-B may receive the IUC information on the resource conflict #1 in the PSFCH resource #1 and may receive the IUC information on the resource conflict #2 in the PSFCH resource #2. The UE-B may perform sidelink communication (e.g., resource (re)selection operation) considering the IUC information. According to the mapping relationship in Table 4, traffic can be prevented from concentrating on a specific PSFCH resource, and thus a possibility of signal conflicts can be reduced.

**[Table 4]**

| **PSFCH** | **IUC information** |
|---|---|
| PSFCH resource #1 | Resource conflict #1 |
| PSFCH resource #2 | Resource conflict #1 |

Based on the mapping relationship in Table 5, the UE-A may transmit IUC information (e.g., information on the resource conflict #1 and resource conflict #2) to the UE-B using the latest PSFCH resource #2 among the plurality of PSFCH resources in the time domain. The UE-B may receive the IUC information of the UE-A in the PSFCH resource #2, and perform sidelink communication (e.g., resource (re)selection operation) considering the IUC information.

**[Table 5]**

| **PSFCH** | **IUC information** |
|---|---|
| PSFCH resource #1 | - |
| PSFCH resource #2 | Resource conflicts #1 and #2 |

According to the mapping relationships in Tables 4 and 5, the UE-A may generate the latest IUC information until the PSFCH resource, and transmit the IUC information to the UE-B in the latest PSFCH resource, considering a transmission latency, etc. The mapping relationship between PSFCH resources and resource conflicts may be configured based on rule(s) defined in Table 6 below.

**[Table 6]**

| **Rule** | **Description** |
|---|---|
| Rule #1 | The earliest PSFCH resource among PSCFH resources where IUC information can be transmitted in the time domain may be used for transmission of IUC information. |
| Rule #2 | When an interval between PSFCH resources and a temporal location of resource conflict(s) is equal to or greater than a time offset in the time domain, the earliest PSFCH resource or the latest PSFCH resource among the PSFCH resources may be used for transmission of IUC information. |
| Rule #3 | When an interval between PSFCH resources and a temporal location of resource conflict(s) is less than a time offset in the time domain, the earliest PSFCH resource or the latest PSFCH resource among the PSFCH resources may be used for transmission of IUC information. |
| Rule #4 | The latest PSFCH resource among PSCFH resources where IUC information can be transmitted in the time domain may be used for transmission of IUC information. |

In Table 6, the time offset may be configured on a symbol or slot basis. The base station (or UE) may transmit information on the time offset to the UE(s) using at least one of system information, RRC message, MAC message, or PHY message. For example, the information on the time offset may be included in a MAC CE, first-stage SCI, and/or second-stage SCI. The information on the time offset may be transmitted on a PSCCH and/or PSSCH (e.g., data region within a PSSCH). The UE(s) may receive the information of the time offset from the base station or another UE.

The mapping relationship between PSFCH resources and resource conflicts may be configured variously. The mapping relationship described above, extensions of the mapping relationship, modifications of the mapping relationship, and/or combinations of the mapping relationships may be used. The UE-B may transmit SCI (e.g., SCI requesting transmission of IUC information), and the SCI may include configuration information of the mapping relationship between PSFCH resources and resource conflicts. The mapping relationship (e.g., rule of the mapping relationship) for each of resources indicated by the SCI may be indicated. Alternatively, the mapping relationship (e.g., rule of the mapping relationship) for all resources indicated by the SCI may be indicated. The UE-B may inform the UE-A of a rule of the mapping relationship between PSFCH resources and resource conflicts. For example, the SCI transmitted by the UE-B may include an indicator indicating a rule of the mapping relationship between PSFCH resources and resource conflicts. The size of the indicator may be 2 bits and the indicator may be set as shown in Table 7 below.

**[Table 7]**

| **Indicator** | **Description** |
|---|---|
| 00 | The earliest PSFCH resource among PSCFH resources where IUC information can be transmitted in the time domain may be used for transmission of IUC information. |
| 01 | When an interval between PSFCH resources and a temporal location of resource conflict(s) is equal to or greater than a time offset in the time domain, the earliest PSFCH resource or the latest PSFCH resource among the PSFCH resources may be used for transmission of IUC information. |
| 10 | When an interval between PSFCH resources and a temporal location of resource conflict(s) is less than a time offset in the time domain, the earliest PSFCH resource or the latest PSFCH resource among the PSFCH resources may be used for transmission of IUC information. |
| 11 | The latest PSFCH resource among PSCFH resources where IUC information can be transmitted in the time domain may be used for transmission of IUC information. |

The indicator set to 00 may indicate the rule #1 of Table 6, the indicator set to 01 may indicate the rule #2 of Table 6, the indicator set to 10 may indicate the rule #3 of Table 6, and the indicator set to 11 may indicate the rule #4 of Table 6. The rule of the mapping relationship between PSFCH resources and resource conflicts may be referred to as `PSFCH mapping scheme'. That is, the indicator in Table 7 may be an indicator of the PSFCH mapping scheme. The SCI (e.g., SCI requesting transmission of IUC information) of the UE-B may indicate the PSFCH mapping scheme. Based on Table 8 below, the PSFCH mapping scheme for each of the resources indicated by the SCI may be indicated. Alternatively, the PSFCH mapping scheme for all resources indicated by the SCI may be indicated.

**[Table 8]**

| **Resources indicated by SCI** | **PSFCH mapping scheme indicator** |
|---|---|
| Resource #1 | 00 |
| Resource #2 | 11 |

Priorities of the PSFCH mapping schemes may configured. Based on a PSFCH mapping scheme with a high priority, PSFCH resources may be allocated. When there are no PSFCH resources that satisfy a specific condition, PSFCH resources may be allocated based on a PSFCH mapping scheme with the next priority. A PSFCH resource used for transmission of IUC information for each of the resources indicated by the SCI of UE-B may be indicated, and the indicated PSFCH resource may be used.

In order to transmit IUC information for each of two or more resource conflicts in one PSFCH symbol in the time domain, a plurality of PSFCH resources (e.g., a plurality of PSFCH frequency resources) for one PSFCH symbol may be configured in the frequency domain. The UE-A may transmit IUC information to the UE-B using each of the plurality of PSFCH frequency resources in one PSFCH symbol. A mapping relationship between PSFCH frequency resources and resource conflicts may be configured based on locations of the resource conflicts. IUC information for one resource conflict may be mapped to a PSFCH frequency resource in an one-to-one manner. Alternatively, IUC information for a plurality of resource conflicts may be mapped to one PSFCH frequency resource.

When IUC information for one resource conflict is mapped to a PSFCH frequency resource in the one-to-one manner, whether the resource conflict exists or not may be indicated by ACK or NACK. When IUC information for a plurality of resource conflicts is mapped to one PSFCH frequency resource, whether the resource conflict(s) exist or not may be indicated based on rules in Table 9 below.

**[Table 9]**

| **Rule** | **Description** |
|---|---|
| Rule # 1 | When one or more resource conflicts exist (e.g., when n or more resource conflicts exist), the UE-A may transmit ACK in the PSFCH resource. When there is no resource conflict, the UE-A may transmit NACK in the PSFCH resource. |
| Rule #2 | When one or more resource conflicts exist (e.g., when n or more resource conflicts exist), the UE-A may transmit NACK in the PSFCH resource. When there is no resource conflict, the UE-A may transmit ACK in the PSFCH resource. |
| Rule #3 | Only when one or more resource conflicts exist (e.g., only when n or more resource conflicts exist), the UE-A may transmit ACK in the PSFCH resource. That is, Rule #3 may be an ACK-only scheme. |
| Rule #4 | Only when one or more resource conflicts exist (e.g., only when n or more resource conflicts exist), the UE-A may transmit NACK in the PSFCH resource. That is, Rule #4 may be a NACK-only scheme. |
| Rule #5 | Only when no resource conflict exists (or only when resource conflicts less than n exist), the UE-A may transmit ACK in the PSFCH resource. That is, Rule #5 may be an ACK-only scheme. |
| Rule #6 | Only when no resource conflict exists (or only when resource conflicts less than n exist), the UE-A may transmit NACK in the PSFCH resource. That is, Rule #6 may be a NACK-only scheme. |

In the exemplary embodiment according to Table 9, ACK or NACK may be transmitted in form of a sequence in the PSFCH resource. In Table 9, n may be a natural number. The base station (or UE) may transmit information on n to the UE(s) using at least one of system information, RRC message, MAC message, or PHY message. The UE(s) may receive information on n from the base station or another UE.

In the above-described exemplary embodiment, a plurality of IUC information may be transmitted in one PSFCH resource. The above-described exemplary embodiments, extensions of the exemplary embodiments, modifications of the exemplary embodiments, and/or combination of the exemplary embodiments may be used. The SCI (e.g., SCI requesting transmission of IUC information) of the UE-B may indicate a PSFCH mapping scheme. For example, a PSFCH mapping scheme for each of resources indicated by the SCI of the UE-B may be indicated. Alternatively, a PSFCH mapping scheme for all resources indicated by the SCI of the UE-B may be indicated. The above-described exemplary embodiment (e.g., exemplary embodiment according to Tables 7 and 8) can be applied to a scenario in which a plurality of IUC information is transmitted on one PSFCH resource. The above-described embodiments (e.g., exemplary embodiments according to Tables 7 and 8, exemplary embodiments that transmit a plurality of IUC information in one PSFCH resource), extensions of the exemplary embodiments, modifications of the exemplary embodiments, and/or combinations of the exemplary embodiments may be used.

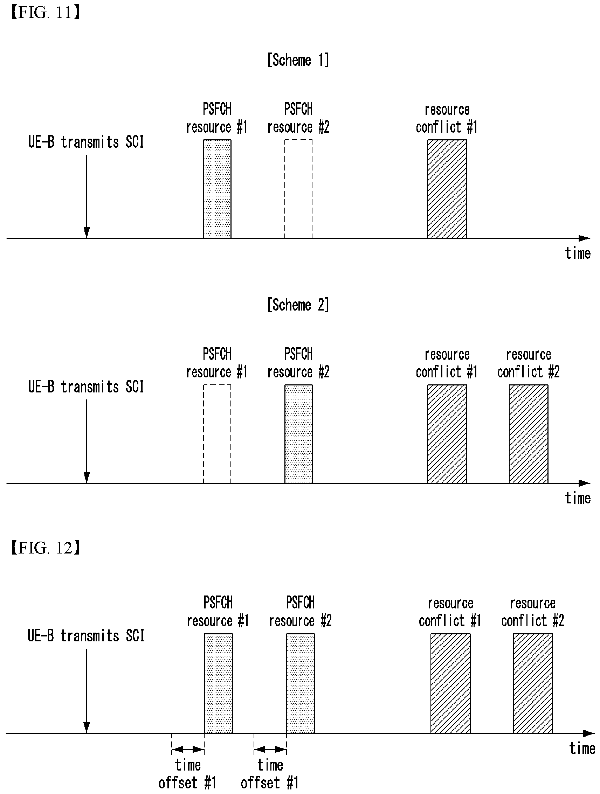

FIG. 11 is a timing diagram illustrating a third exemplary embodiment of a method for transmitting IUC information.

As shown in FIG. 11, depending on a location of a PSFCH resource in which IUC information is transmitted, resource conflict(s) indicated by the IUC information may vary. In Scheme 1, the IUC information may be transmitted in the PSFCH resource #1. In the instant case, the UE-A may terminate the monitoring operation for detection of resource conflicts before the PSFCH resource #1, and generate the IUC information based on a result of the monitoring operation. The IUC Information may indicate the resource conflict #1. In Scheme 1, the monitoring operation may be performed in a period from a reception time of SCI to the PSFCH resource #1.

In Scheme 2, IUC information may be transmitted in the PSFCH resource #2. In the instant case, the UE-A may terminate a monitoring operation for detection of resource conflicts before the PSFCH resource #2, and generate IUC information based on a result of the monitoring operation. The IUC information may indicate the resource conflict #1 and resource conflict #2. In Scheme 2, the monitoring operation may be performed in a period from a reception time of SCI to the PSFCH resource #2. The monitoring period in Scheme 1 may be shorter than the monitoring period in Scheme 2. That is, an additional monitoring operation may be performed in Scheme 2, and accordingly, the number of resource conflicts detected in Scheme 2 may be greater than the number of resource conflicts detected in Scheme 1.

FIG. 12 is a timing diagram illustrating a fourth exemplary embodiment of a method for transmitting IUC information.

As shown in FIG. 12, a plurality of resource conflicts may be detected, a plurality of PSFCH resources for transmission of IUC information for a plurality of resource conflicts may exist, and the mapping relationship between PSFCH resources and resource conflicts according to Table 4 may be applied. In the instant case, the UE-A may perform a monitoring operation for detection of resource conflicts in a period from a reception time of SCI (or a time after reception of the SCI) to a time corresponding to (PSFCH resource #1 - time offset #1). The UE-A may transmit IUC information on the detected resource conflict #1 to the UE-B in the PSFCH resource #1. The UE-B may receive the IUC information of the UE-A in the PSFCH resource #1. After transmitting the IUC information in the PSFCH resource #1, the UE-A may perform a monitoring operation for detection of resource conflicts in a period from the PSFCH resource #1 (or a time after the PSFCH resource #1) to a time corresponding to (PSFCH resource #2 - time offset #1). The UE-A may transmit IUC information on the detected resource conflict #2 to the UE-B in the PSFCH resource #2. The UE-B may receive the IUC information of the UE-A in the PSFCH resource #2.

Alternatively, in the exemplary embodiment of FIG. 12, the mapping relationship between PSFCH resources and resource conflicts according to Table 5 may be applied. In the instant case, the UE-A may perform a monitoring operation for detection of resource conflicts in a period from a reception time of the SCI (or a time after reception of the SCI) to a time corresponding to (PSFCH resource #2 - time offset #1). The UE-A may transmit IUC information on the resource conflicts #1 and #2 to the UE-B in the PSFCH resource #2. The UE-B may receive the IUC information of the UE-A in the PSFCH resource #2.

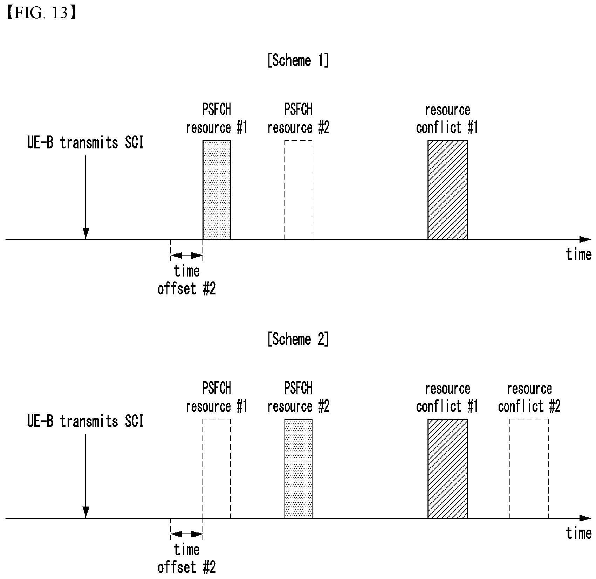

FIG. 13 is a timing diagram illustrating a fifth exemplary embodiment of a method for transmitting IUC information.

As shown in FIG. 13, a plurality of PSFCH resources for transmission of IUC information may exist, and a monitoring period for detection of resource conflicts may be determined based on the earliest PSFCH resource #1 among the plurality of PSFCH resources in the time domain. For example, the UE-A may perform a monitoring operation for detection of resource conflicts in a period from a reception time of the SCI (or a time after reception of the SCI) to a time corresponding to (PSFCH resource #1 - time offset #2).

In Scheme 1, the IUC information may be transmitted in the PSFCH resource #1, and in Scheme 2, the IUC information may be transmitted in the PSFCH resource #2. Even when the IUC information is transmitted in the PSFCH resource #2 in Scheme 2, a monitoring period for detection of resource conflicts is determined based on the PSFCH resource #1 rather than the PSFCH resource #2, so that the resource conflict #2 may not be detected. Therefore, the IUC information transmitted in the PSFCH resource #2 may indicate the resource conflict #1. The IUC information in Scheme 1 and the IUC information in Scheme 2 may indicate the same resource conflict.

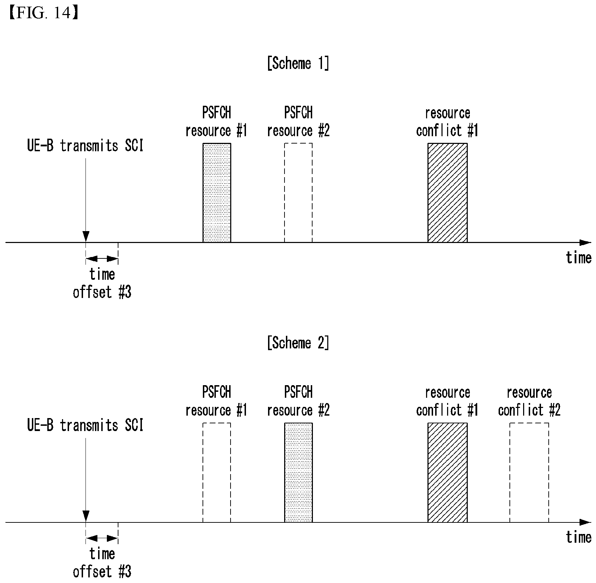

FIG. 14 is a timing diagram illustrating a sixth exemplary embodiment of a method for transmitting IUC information.

As shown in FIG. 14, a plurality of PSFCH resources for transmission of IUC information may exist, and a monitoring operation for detection of resource conflicts may be performed in a period from a reception time of the SCI of the UE-B (or a time after reception of the SCI) to a time offset #3. In Scheme 1, the IUC information may be transmitted in the PSFCH resource #1, and in Scheme 2, the IUC information may be transmitted in the PSFCH resource #2. Since monitoring operations for detection of resource conflicts in Scheme 1 and Scheme 2 are performed in the same period, resource conflicts detected in Scheme 1 may be the same as resource conflicts detected in Scheme 2. That is, the IUC information in Scheme 1 and the IUC information in Scheme 2 may indicate the same resource conflicts.

In the exemplary embodiments of FIGS. 12 to 14, the time offset may be set on a symbol or slot basis. The base station (or UE) may transmit information on the time offset to the UE(s) using at least one of system information, RRC message, MAC message, or PHY message. For example, the UE-B may transmit SCI including information on the time offset to the UE-A. The UE(s) may receive information on the time offset from the base station or another UE. In the exemplary embodiments of FIGS. 12 to 14, the monitoring period (e.g., monitoring time) for detection of resource conflicts may be configured in one scheme. The configuration scheme of the monitoring period may be associated with the mapping relationship between PSFCH resources and resource conflicts described above, and the associated scheme may be applied.

The scheme of configuring the monitoring period (e.g., monitoring time) for detection of resource conflicts and the time offset for the monitoring period may be indicated by the SCI (e.g., signal requesting IUC information) transmitted by the UE-B. The monitoring period for each of the resources indicated by the SCI of the UE-B may be configured, and the time offset for the corresponding monitoring period may be set. Alternatively, a monitoring period for all resources indicated by the SCI of the UE-B may be configured, and a time offset for the monitoring period may be set.

The configuration schemes of the mapping relationship between PSFCH resources and resource conflicts, extensions of the configuration schemes, modifications of the configuration schemes, and/or combinations of the configuration schemes may be applied to the exemplary embodiments of FIGS. 12 to 14 (e.g., method of configuring the monitoring period, method of setting the time offset for the monitoring period). The above-described exemplary embodiments, extensions of the exemplary embodiments, modifications of the exemplary embodiments, and/or combinations of the exemplary embodiments may be applied to IUC Scheme 2 as well as IUC Scheme 1. When the above-described exemplary embodiments are applied to IUC scheme 1, the resource in which the IUC information is transmitted may be a PSCCH resource and/or a PSSCH resource, and the IUC information may indicate preferred resource(s) and/or non-preferred resource(s).

In the above-described exemplary embodiments, a PSFCH resource for transmission of IUC information may overlap with a PSFCH resource for transmission of other signals (e.g., feedback signal). In the instant case, the UE-A may transmit IUC information based on method(s) below.
- **Method #101:** When a PSFCH resource in which IUC information is to be transmitted according to an IUC information transmission request of the first UE-B overlaps with a PSFCH resource in which IUC information is to be transmitted according to an IUC information transmission request of the second UE-B, or when the UE-A is able to transmit IUC information in one PSFCH resource, the UE-A may perform a transmission operation in one PSFCH resource based on priorities. The priority may be a priority for a data resource. Alternatively, the priority may be determined based on a reception order of the SCI.
- **Method #102:** When a PSFCH resource for a HARQ feedback for data transmission scheduled by SCI of a UE overlaps with a PSFCH resource for transmission of IUC information, or when the UE-A is able to transmit IUC information in one PSFCH resource, the UE-A may perform a transmission operation in one PSFCH resource based on priorities. A priority of HARQ feedback may be higher than that of IUC information. Alternatively, a priority of IUC information may be higher than a priority of HARQ feedback.

In Method #101 and Method #102, the priority may be set in advance. The UE-B may explicitly indicate the priority to the UE-A. For example, the base station (or UE) may transmit priority information related to Method #101 and/or Method #102 to the UE(s) using at least one of system information, RRC message, MAC message, or PHY message. The UE(s) may receive the priority information from the base station or another UE.

SCI may include an IUC enable/disable indicator. Alternatively, the IUC enable/disable indicator may be transmitted using at least one of system information, RRC message, MAC message, or PHY message. The IUC enable/disable indicator may indicate whether to transmit IUC information in a PSFCH resource. When the IUC enable/disable indicator is set to 'enable', this may indicate that IUC information is transmitted in a PSFCH resource. When the IUC enable/disable indicator is set to `disable', this may indicate that IUC information is not transmitted in a PSFCH resource. The IUC enable/disable indicator may be set independently of a HARQ feedback enable/disable indicator.

When IUC information for a specific resource is required, the UE-B may transmit SCI including an IUC enable/disable indicator that indicates transmission of IUC information. In addition, the SCI may further include a HARQ feedback enable/disable indicator. A combination of the IUC enable/disable indicator and the HARQ feedback enable/disable indicator may be used. The above-described combination may indicate transmission of IUC information and/or HARQ feedback in a PSFCH resource.

When a plurality of IUC information exist, a plurality of IUC enable/disable indicators may be used to indicate transmission of the respective IUC information. Alternatively, one IUC enable/disable indicator may indicate whether to transmit a plurality of IUC information. The IUC enable/disable indicator may be operated to enable transmission of IUC information for a specific reserved resource among a plurality of reserved resources. In the above-described exemplary embodiments, the IUC enable/disable indicator may be applied. In the instant case, the UE(s) may operate based on method(s) below.
- **Method** #201: The UE-B may perform a measurement operation for a channel busy ratio (CBR) and/or channel occupancy ratio (CR) in a resource pool. When a result of the measurement operation (e.g., a measured value of CBR and/or CR) is greater than or equal to a threshold, the UE-B may determine that there is a lot of traffic in the corresponding resource pool, and disable transmission of IUC information in a PSFCH resource. `A lot of traffic in the resource pool' may mean insufficient resources for transmission of SCI requesting transmission of IUC information and/or transmission of IUC information or a high conflict probability in a resource for transmission of SCI requesting transmission of IUC information and/or transmission of IUC information. In the instant case, the UE-B may disable a transmission operation of IUC information in a PSFCH resource. For example, the UE-B may not transmit SCI (or a separate signal) requesting transmission of IUC information to the UE-A. Alternatively, the UE-B may transmit SCI including an IUC enable/disable indicator set to 'disable' to the UE-A.
- **Method #202:** The UE-B may perform a measurement operation for a CBR and/or CR in a resource pool. When a result of the measurement operation (e.g., a measured value of CBR and/or CR) is less than a threshold, the UE-B may determine that there is small traffic in the corresponding resource pool, and enable transmission of IUC information in a PSFCH resource. `Small traffic in the resource pool' may mean sufficient resources for transmission of SCI requesting transmission of IUC information and/or transmission of IUC information or a low conflict probability in a resource for transmission of SCI requesting transmission of IUC information and/or transmission of IUC information. In the instant case, the UE-B may enable a transmission operation of IUC information in a PSFCH resource. For example, the UE-B may transmit SCI (or a separate signal) requesting transmission of IUC information to the UE-A. Alternatively, the UE-B may transmit SCI including an IUC enable/disable indicator set to 'enable' to the UE-A.
- **Method #203:** The UE-A may perform a measurement operation for a CBR and/or CR in a resource pool. When a result of the measurement operation (e.g., a measured value of CBR and/or CR) is greater than or equal to a threshold, the UE-A may determine that there is a lot of traffic in the corresponding resource pool, and disable transmission of IUC information in a PSFCH resource. 'A lot of traffic in the resource pool' may mean insufficient resources for transmission of SCI requesting transmission of IUC information and/or transmission of IUC information or a high conflict probability in a resource for transmission of SCI requesting transmission of IUC information and/or transmission of IUC information. In the instant case, a transmission operation of IUC information in a PSFCH resource may be disabled. For example, even when SCI (or a separate signal) requesting transmission of IUC information is received from the UE-B, since a transmission operation of IUC information is disabled, the UE-A may not transmit IUC information to the UE-B.
- **Method #204:** The UE-A may perform a measurement operation for a CBR and/or CR in a resource pool. When a result of the measurement operation (e.g., a measured value of CBR and/or CR) is less than a threshold, the UE-A may determine that there is small traffic in the corresponding resource pool, and enable transmission of IUC information in a PSFCH resource. `Small traffic in the resource pool' may mean sufficient resources for transmission of SCI requesting transmission of IUC information and/or transmission of IUC information or a low conflict probability in a resource for transmission of SCI requesting transmission of IUC information and/or transmission of IUC information. In the instant case, a transmission operation of IUC information in a PSFCH resource may be enabled. For example, when SCI (or a separate signal) requesting transmission of IUC information is received from the UE-B, since a transmission operation of IUC information is enabled, the UE-A may transmit IUC information to the UE-B.

Methods #201 to #204 described above may be applied in reverse as follows.
- **Method #205:** The UE-B may perform a measurement operation for a CBR and/or CR in a resource pool. When the CBR and/or CR in the resource pool is greater than or equal to a threshold, the UE-B may determine that IUC information is required for a resource (re)selection operation in the resource pool, and enable a transmission operation of IUC information in a PSFCH resource. In the instant case, the UE-B may transmit SCI (or a separate signal) requesting transmission of IUC information to the UE-A. An IUC enable/disable indicator included in the SCI may be set to `enable'.
- **Method #206:** The UE-B may perform a measurement operation for a CBR and/or CR in a resource pool. When the CBR and/or CR in the resource pool is less than a threshold, the UE-B may determine that IUC information is not required for a resource (re)selection operation in the resource pool, and disable a transmission operation of IUC information in a PSFCH resource. In the instant case, the UE-B may not transmit SCI (or a separate signal) requesting transmission of IUC information to the UE-A. Alternatively, the UE-B may transmit SCI including an IUC enable/disable indicator set to 'disable' to the UE-A.
- **Method #207:** The UE-A may perform a measurement operation for a CBR and/or CR in a resource pool. When the CBR and/or CR in the resource pool is greater than or equal to a threshold, the UE-A may determine that transmission of IUC information is required, and enable a transmission operation of IUC information in a PSFCH resource. In the instant case, when SCI (or a separate signal) requesting transmission of IUC information is received from the UE-B, since a transmission operation of IUC information is enabled, the UE-A may transmit IUC information to the UE-B.
- **Method #208:** The UE-A may perform a measurement operation for a CBR and/or CR in a resource pool. When the CBR and/or CR in the resource pool is less than a threshold, the UE-A may determine that transmission of IUC information is not required, and disable a transmission operation of IUC information in a PSFCH resource. In the instant case, even when SCI (or a separate signal) requesting transmission of IUC information is received from the UE-B, since a transmission operation of IUC information is disabled, the UE-A may not transmit IUC information to the UE-B.

In a combination of Method #201 and Method #204, the UE(s) may operate as follows. When the CBR and/or CR in the resource pool is equal to or greater than a threshold, the UE-B may transmit SCI including an IUC enable/disable indicator set to 'disable'. The UE-A may receive the SCI from the UE-B, and may identify that a transmission operation of IUC information is disabled based on the information (e.g., indicator) included in the SCI. The UE-A may measure a CBR and/or CR in a resource pool. When the CBR and/or CR in the resource pool is less than a threshold, the UE-A may determine that there is small traffic in the resource pool and enable a transmission operation of IUC information. Even when the UE-B disables a transmission operation of IUC information, if the UE-A determines that transmission of IUC information is required, the UE-A may transmit IUC information to the UE-B.

In a combination of Method #206 and Method #207, the UE(s) may operate as follows. When the CBR and/or CR in the resource pool is less than a threshold, the UE-B may determine that there is small traffic in the resource pool and may transmit SCI including an IUC enable/disable indicator set to 'disable'. The UE-A may receive the SCI from the UE-B and identify that a transmission operation of IUC information is disabled based on the information (i.e. indicator) included in the SCI. The UE-A may measure a CBR and/or CR in the resource pool. When the CBR and/or CR in the resource pool is greater than or equal to a threshold, the UE-A may determine that transmission of IUC information is required and may enable a transmission operation of IUC information. Even when the UE-B disables a transmission operation of IUC information, if the UE-A determines that transmission of IUC information is required, the UE-A may transmit IUC information to the UE-B.

In addition to the combinations described above, various combinations of Methods #201 to Method #208 may be used. The methods described above, extensions of the methods, modifications of the methods, or combinations of the methods may be used.

The UE(s) responsible for enabling or disabling the IUC operation may measure a CBR and/or CR and compare a measured value to a threshold. The UE-A or UE-B may receive measured value(s) of CBR and/or CR from other UE(s), and consider the measured value(s) of other UE(s) to identify a traffic state of the resource pool. For example, when there are multiple measured values, the UE-A or UE-B may select determine the traffic state of the resource pool based on an average of the multiple measured values, the maximum value of the multiple measured values, or the minimum value of the multiple measured values.

An offset for the measured value of CBR and/or CR may be set. For example, the UE(s) may determine the traffic state of the resource pool based on (measured value + offset) or (measured value - offset). The threshold and/or offset to which measured value is compared may be set for each resource pool. The base station (or UE) may transmit the threshold and/or offset to the UE(s) using at least one of system information, RRC message, MAC message, or PHY message. The UE(s) may receive information of the threshold and/or offset from the base station or another UE.

Methods according to the present disclosure may be implemented in form of program instructions executable through various computer means, and may be recorded on a computer-readable medium. The computer-readable medium may include the program instructions, data files, data structures, etc., singly or in combination. The program instructions recorded on the computer-readable medium may be specially designed and constructed for the present disclosure or may be known and usable by those skilled in the computer software art.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-stage language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment-A (UE-A), the method comprising:
receiving sidelink control information (SCI) from a UE-B;
detecting one or more resource conflicts in resources indicated by the SCI;
identifying one or more physical sidelink feedback channel (PSFCH) resources associated with the one or more resource conflicts; and
transmitting inter-UE coordination (IUC) information on the one or more resource conflicts to the UE-B in the one or more PSFCH resources,
wherein the one or more PSFCH resources exist between a reception time of the SCI and a location of the one or more resource conflicts in a time domain.

2. The method of claim 1, wherein when the one or more resource conflicts include resource conflicts #1 and #2, and the one or more PSFCH resources include PSFCH resources #1 and #2, the IUC information on the resource conflicts #1 and #2 is identified to be transmitted in the PSFCH resource #1 based on a mapping relationship, the PSFCH resource #1 being earlier in the time domain among the PSFCH resources #1 and #2.

3. The method of claim 1, wherein when the one or more resource conflicts include resource conflicts #1 and #2, and the one or more PSFCH resources include PSFCH resources #1 and #2, IUC information #1 on the resource conflict #1 is identified to be transmitted in the PSFCH resource #1 based on a mapping relationship, and IUC information #2 on the resource conflict #2 is identified to be transmitted in the PSFCH resource #2 based on the mapping relationship.

4. The method of claim 1, wherein when the one or more resource conflicts include resource conflicts #1 and #2, and the one or more PSFCH resources include PSFCH resources #1 and #2, the IUC information on the resource conflicts #1 and #2 is identified to be transmitted in the PSFCH resource #2 based on a mapping relationship, the PSFCH resource #2 being later in the time domain among the PSFCH resources #1 and #2.

5. The method of claim 1, wherein when an interval between a plurality of PSFCH resources and the location of the one or more resource conflicts in the time domain is equal to or greater than a time offset, an earliest PSFCH resource or a latest PSFCH resource among the plurality of PSFCH resources is used for transmission of the IUC information.

6. The method of claim 1, wherein when an interval between a plurality of PSFCH resources and the location of the one or more resource conflicts in the time domain is less than a time offset, an earliest PSFCH resource or a latest PSFCH resource among the plurality of PSFCH resources is used for transmission of the IUC information.

7. The method of claim 1, wherein information on a mapping relationship between the one or more resource conflicts and the one or more PSFCH resources is received through at least one of system information, a radio resource control (RRC) message, a medium access control (MAC) message, or a physical (PHY) message.

8. The method of claim 1, wherein when the one or more PSFCH resources include PSFCH resources #1 and #2, and the PSFCH resource #1 is located before the PSFCH resource #2 in the time domain, the detecting of the one or more resource conflicts is performed in a period from a reception time of the SCI to a time corresponding to (PSFCH resource #1 - time offset).

9. The method of claim 1, wherein when the one or more PSFCH resources include PSFCH resources #1 and #2, and the PSFCH resource #1 is located before the PSFCH resource #2 in the time domain, the detecting of the one or more resource conflicts is performed in a period from a reception time of the SCI to a time corresponding to (PSFCH resource #2 - time offset).

10. The method of claim 1, wherein when the one or more PSFCH resources include PSFCH resources #1 and #2, and the PSFCH resource #1 is located before the PSFCH resource #2 in the time domain, the detecting of the one or more resource conflicts is performed in a period from a time corresponding to the PSFCH resource #1 to a time corresponding to (PSFCH resource #2 - time offset).

11. The method of claim 1, wherein the detecting of the one or more resource conflicts is performed in a period from a reception time of the SCI to a preconfigured time offset.

12. The method of claim 1, wherein the SCI includes an IUC enable/disable indicator indicating to enable or disable a transmission operation of the IUC information, and when the IUC enable/disable indicator indicates to enable the transmission of the IUC information, the detecting of the one or more resource conflicts is performed.

13. The method of claim 1, wherein the SCI includes an IUC enable/disable indicator indicating to enable or disable a transmission operation of the IUC information, and even when the IUC enable/disable indicator indicates to disable the transmission of the IUC information, if the UE-A determines that the transmission operation of the IUC information is required, the detecting of the one or more resource conflicts is performed.

14. The method of claim 13, further comprising:
performing a measurement operation for a channel busy ratio (CBR) or channel occupancy ratio (CR) in a resource pool; and
determining whether a transmission operation of the IUC information is required by comparing a result of the measurement operation with a threshold.

15. A method of a user equipment-B (UE-B), the method comprising:
transmitting sidelink control information (SCI) to a UE-A;
identifying one or more physical sidelink feedback channel (PSFCH) resources associated with one or more resource conflicts detected in resources indicated by the SCI; and
receiving inter-UE coordination (IUC) information on the one or more resource conflicts from the UE-A in the one or more PSFCH resources,
wherein the one or more PSFCH resources exist between a reception time of the SCI and a location of the one or more resource conflicts in a time domain.

16. The method of claim 15, wherein when the one or more resource conflicts include resource conflicts #1 and #2, and the one or more PSFCH resources include PSFCH resources #1 and #2, the IUC information on the resource conflicts #1 and #2 is received in the PSFCH resource #1, the PSFCH resource #1 being earlier in the time domain among the PSFCH resources #1 and #2.

17. The method of claim 15, wherein when the one or more resource conflicts include resource conflicts #1 and #2, and the one or more PSFCH resources include PSFCH resources #1 and #2, IUC information #1 on the resource conflict #1 is received in the PSFCH resource #1, and IUC information #2 on the resource conflict #2 is received in the PSFCH resource #2.

18. The method of claim 15, wherein when the one or more resource conflicts include resource conflicts #1 and #2, and the one or more PSFCH resources include PSFCH resources #1 and #2, the IUC information on the resource conflicts #1 and #2 is received in the PSFCH resource #2, the PSFCH resource #2 being later in the time domain among the PSFCH resources #1 and #2.

19. The method of claim 15, wherein the SCI includes an IUC enable/disable indicator indicating to enable or disable a transmission operation of the IUC information, and when the IUC enable/disable indicator indicates to enable the transmission of the IUC information, the IUC information on the one or more resource conflicts is received.

20. The method of claim 15, wherein the SCI includes an IUC enable/disable indicator indicating to enable or disable a transmission operation of the IUC information, and even when the IUC enable/disable indicator indicates to disable the transmission of the IUC information, if the UE-A determines that the transmission operation of the IUC information is required, the IUC information on the one or more resource conflicts is received.
